# EUROPÄISCHE PATENTSCHRIFT

(11) **EP 3 644 748 B1**
(45) Veröffentlichungstag und Bekanntmachung des Hinweises auf die Patenterteilung: **30.10.2024**
(21) Anmeldenummer: 17734315.9
(22) Anmeldetag: 30.06.2017
(51) Int. Cl.: A22B 7/00, A22C 21/00

(54) **FÖRDEREINRICHTUNG UND VERFAHREN ZUM FÖRDERN VON GEFLÜGELKÖRPERN SOWIE VORRICHTUNG UND VERFAHREN ZUR FILETGEWINNUNG VON GEFLÜGELKÖRPERN**
CONVEYING ARRANGEMENT AND METHOD FOR CONVEYING POULTRY BODIES, AND APPARATUS AND METHOD FOR RECOVERING FILLETS FROM POULTRY BODIES
APPAREIL DE TRANSPORT ET PROCÉDÉ POUR LE TRANSPORT DE CORPS DE VOLAILLES AINSI QUE DISPOSITIF ET PROCÉDÉ D'OBTENTION DE FILETS À PARTIR DE CORPS DE VOLAILLES

(43) Veröffentlichungstag der Anmeldung: 06.05.2020
(73) Patentinhaber: Nordischer Maschinenbau Rud. Baader GmbH + Co. KG, 23560 Lübeck (DE)
(72) Erfinder: RIGGERT, Lasse, 23684 Scharbeutz (DE); SCHULZE, Adrian, 23564 Lübeck (DE); SCHRÖDER, Matthias, 23617 Stockelsdorf (DE)
(74) Vertreter: Stork Bamberger Patentanwälte PartmbB
(86) Internationale Anmeldenummer: PCT/EP2017/066276
(87) Internationale Veröffentlichungsnummer: WO 2019/001728

(56) Entgegenhaltungen:
- EP-A1- 0 551 156
- EP-A1- 0 875 459
- DE-A1- 4 234 040
- US-A1- 2012 011 808

## Beschreibung

Die vorliegende Erfindung betrifft eine Fördereinrichtung zum kontinuierlichen Fördern von Geflügelkörpern in Förderrichtung, ausgebildet und eingerichtet zum Ausrichten der Geflügelkörper in verschiedene Bearbeitungspositionen, umfassend einen mit Aufnahmeelementen zur Halterung der Geflügelkörper versehenen Endlosförderer, wobei der Endlosförderer in einer Förderebene umlaufend eingerichtet ist und eine Förderstrecke bildet, und wobei die Aufnahmeelemente jeweils ein zur Aufnahme eines der Geflügelkörper eingerichtetes und an einem Basiselement um eine senkrecht zu der Förderrichtung liegende Drehachse schwenkbar angeordnetes Sattelelement umfassen.

Des Weiteren betrifft die Erfindung ein Verfahren zum kontinuierlichen Fördern von Geflügelkörpern und zum Ausrichten derselben in verschiedene Bearbeitungspositionen, umfassend Fördern der Geflügelkörper in Förderrichtung mittels eines mit Aufnahmeelementen zur Halterung der Geflügelkörper versehenen Endlosförderers, wobei der Endlosförderer eine Förderstrecke bildet und in einer Förderebene umläuft, und wobei die Aufnahmeelemente jeweils ein zur Aufnahme eines der Geflügelkörper eingerichtetes und an dem Basiselement um eine senkrecht zu der Förderrichtung liegende Drehachse schwenkbar angeordnetes Sattelelement umfassen.

Die vorliegende Erfindung betrifft auch eine Vorrichtung zur Filetgewinnung von Geflügelkörpern oder Teilen davon sowie ein entsprechendes Verfahren.

Derartige Fördereinrichtungen, Verfahren zum kontinuierlichen Fördern, Vorrichtungen und Verfahren zur Filetgewinnung kommen bei der voll- oder halbautomatischen Verarbeitung von Geflügelkörpern bzw. Geflügelkörperteilen zum Einsatz. Ein solches Verfahren zum maschinellen Gewinnen des Fleisches von Geflügelkörpern sowie eine Einrichtung zur Durchführung eines solchen Verfahrens geht beispielsweise aus dem Dokument DE 42 34 040 A1 aus dem Hause der Anmelderin, und aus dem Dokument EP-A1-0551156 hervor.

Die zu bearbeitenden Geflügelkörper bestehen aus Brustkappen. Die Brustkappen sind Teil eines "front-half", das durch das mittige Zerteilen eines Geflügelkörpers erhalten wird. Derartige Brustkappen entstehen beispielsweise mittels Schrägschnitt durch das "front-half". Eine solche Brustkappe umfasst daher im Wesentlichen Teile des Brustkorbs mit den Rippen, das Brustbein und das Gabelbein mit den Flügelgelenken an den freien Enden. An diesen setzen einerseits das Gabelbein und andererseits die Schulterblätter an. Die Geflügelkörper bzw. die Brustkappen werden mittels Aufnahmen gehalten und in Richtung ihrer Längsachse mit vorausweisenden Flügelgelenken gefördert. Entlang des Transportweges sind verschiedene Werkzeuge angeordnet, mittels derer die Bearbeitung der Geflügelkörper sequentiell erfolgt.

Nachteilig ist, dass die Förderung der Aufnahmen für die Geflügelkörper oder der Teile davon mit starrer Ausrichtung erfolgt. Um mittels der jeweiligen Bearbeitungswerkzeuge die gewünschten Bearbeitungsschritte an dem Geflügelkörper oder den Geflügelteilen ausführen zu können, werden hohe Anforderungen hinsichtlich der Beweglichkeit der Werkzeuge gestellt. Die Werkzeuge müssen sozusagen um die Geflügelkörper herumarbeiten. Hierzu ist es erforderlich, die Werkzeuge mit entsprechend vielen Freiheitsgraden auszustatten, sodass ein hoher baulicher Aufwand und entsprechend hohe Werkzeugkosten entstehen.

Es ist daher Aufgabe der vorliegenden Erfindung, eine Fördereinrichtung zum kontinuierlichen Fördern von Geflügelkörpern oder Teilen davon vorzuschlagen, die es erlaubt, die Geflügelkörper bzw. die Geflügelteile während des Fördervorgangs in verschiedene Bearbeitungspositionen auszurichten.

Des Weiteren besteht die Aufgabe darin, eine entsprechende Vorrichtung zur Filetgewinnung von Geflügelkörpern oder Teilen davon vorzuschlagen. Darüber hinaus besteht die Aufgabe darin, entsprechende Verfahren zum kontinuierlichen Fördern von Geflügelkörpern oder Teilen davon vorzuschlagen.

Die Aufgabe wird durch eine Fördereinrichtung mit den eingangs genannten Merkmalen dadurch gelöst, dass der Endlosförderer derart in Schrägstellung angeordnet ist, dass die Förderebene gegenüber der Horizontalen um einen Neigungswinkel α größer 0° und kleiner 90° geneigt ist und die Basiselemente jeweils mittels Winkelelementen mit einem Streckwinkel β kleiner 180° und größer 90° an dem Endlosförderer angeordnet sind.

Dies bietet den Vorteil, dass die Ausrichtung bzw. Orientierung der Sattelelemente jeweils während eines Umlaufs des Endlosförderers veränderlich ist. Auf diese Weise findet eine selbsttätige Ausrichtung der Geflügelkörper oder der Geflügelteile im Umlauf statt. Mittels der erfindungsgemäßen Fördereinrichtung ist es daher erstmals möglich, die Geflügelkörper bzw. die Geflügelteile während des Fördervorgangs in eine Vielzahl von verschiedenen Bearbeitungspositionen auszurichten. Die jeweils erforderlichen Bearbeitungsschritte an den Geflügelkörpern oder den Teilen davon können nun an denjenigen Stellen der Förderstrecke durchgeführt werden, an denen die Sattelelemente in der jeweils optimalen Position für Bearbeitungszwecke ausgerichtet sind.

Die erfindungsgemäße Fördereinrichtung gewährleistet also eine optimale Ausrichtung der Geflügelkörper bzw. der Geflügelteile, sodass die Bearbeitungsschritte einerseits mit hoher Präzision und andererseits mittels Bearbeitungswerkzeugen ausgeführt werden können, die hinsichtlich ihrer räumlichen Beweglichkeit eine vergleichsweise geringe Werkzeugkomplexität aufweisen.

Eine zweckmäßige Ausgestaltung der Erfindung ist dadurch gekennzeichnet, dass die Winkelgröße des Streckwinkels β der Differenz aus 180° und dem Neigungswinkel α entspricht. Mit anderen Worten steht der Schrägstellung der Förderebene des Endlosförderers um den Neigungswinkel α der Streckwinkel β der Winkelelemente gegenüber, und zwar derart, dass die Endlosfördererneigung zumindest im Wesentlichen durch die Winkelelemente mit dem Streckwinkel β kompensiert wird. Dies bedeutet, dass die Drehachsen der Sattelelemente vorteilhafter Weise zumindest in einem Teil der Förderstrecke horizontal oder vertikal ausgerichtet sind.

Eine bevorzugte Weiterbildung der Erfindung zeichnet sich dadurch aus, dass der Streckwinkel β eine Winkelgröße von 135° und der Neigungswinkel α eine Winkelgröße von 45° aufweist. Die Wahl der vorgenannten Winkelgrößen bietet den Vorteil, dass in einem Teil der Förderstrecke die Drehachsen der Sattelelemente parallel zur Horizontalen ausgerichtet sind, während in einem anderen Teil der Förderstrecke die Drehachsen der Sattelelemente vertikal ausgerichtet sind. Durch die Schrägstellung der Fördereinrichtung ergibt sich ein unterer Abschnitt der Förderstrecke sowie ein oberer Abschnitt der Förderstrecke. Vorzugsweise sind so die Drehachsen in dem oberen Abschnitt parallel zur Horizontalen ausgerichtet, während die Drehachsen im unteren Abschnitt parallel zur Vertikalen ausgerichtet sind.

Ein weiterer Vorteil besteht darin, dass im Bereich des unteren Abschnitts die Geflügelkörper oder die Teile davon mittels der Sattelelemente derart gefördert werden, dass diese von oben gehalten, also nach unten freihängend, gefördert werden. Dies bietet den Vorteil, dass mittels der Bearbeitungswerkzeuge abgetrennte oder bereits angelöste Teile der Schwerkraft folgend frei nach unten fallen oder hängen, sodass der Bearbeitungsbereich frei von den genannten Teilen und somit für den Eingriff weiterer Werkzeuge zugänglich ist.

Eine weitere zweckmäßige Ausbildung der Erfindung ist dadurch gekennzeichnet, dass jeweils der Streckwinkel β der Winkelelemente einstellbar eingerichtet ist. So wird ein möglichst großer Flexibilitätsgrad der erfindungsgemäßen Fördereinrichtung erreicht. Durch Ändern des Streckwinkels β der Winkelelemente kann die Ausrichtung der Sattelelemente bzw. die sich in jedem Umlauf ergebenden verschiedenen Ausrichtungen der Sattelelemente optimal an die jeweiligen Gegebenheiten angepasst werden.

Die Winkelelemente weisen hierzu beispielsweise einen Verstellmechanismus auf, mittels dessen die Winkelgröße des Streckwinkels β voreingestellt werden kann. Auch ist es möglich, die Winkelelemente mit Stellgliedern auszustatten, sodass eine Anpassung der jeweiligen Streckwinkel optional während des laufenden Betriebs ermöglicht wird.

Eine zweckmäßige Ausgestaltung der Erfindung sieht vor, dass der Endlosförderer zwei parallel zueinander angeordnete Förderketten umfasst, die jeweils über mindestens zwei Doppelkettenräder geführt sind. Auf diese Weise wird eine präzise Führung der jeweils über das Basiselement mit den Förderketten verbundenen Sattelelementen erzielt. Mittels der zwei Förderketten wird das jeweilige Basiselement präzise gehalten.

Gemäß einer weiteren bevorzugten Ausbildung der Erfindung ist vorgesehen, dass die Winkelelemente an Halteeinrichtungen angeordnet sind, die jeweils an beiden der Förderketten angeordnet sind. Durch die Verbindung der Winkelelemente über die Halteeinrichtung mit jeweils beiden der Förderketten, wird eine besonders steife Verbindung zwischen den jeweiligen Förderketten und den Winkelelementen erzielt, sodass die Orientierung und Ausrichtung der Aufnahmeelemente auch unter Beaufschlagung mit Orientierung und Ausrichtung der Aufnahmeelemente auch unter Beaufschlagung mit externen Kräften, die beispielsweise durch die Bearbeitungswerkzeuge über die Geflügelkörper einwirken, exakt beibehalten wird.

Eine weitere zweckmäßige Ausbildung der Erfindung ist dadurch gekennzeichnet, dass die Halteeinrichtungen jeweils plattenförmig ausgebildet sind und jedes der Basiselemente über jeweils zwei der Winkelelemente mit einer der Halteeinrichtungen verbunden ist. Jeweils eine der Halteeinrichtungen, der Basiselemente sowie jeweils zwei der Winkelelemente, die jeweils die Halteeinrichtung mit dem Basiselement verbindet, bilden eine besonders steife Einheit, die eine entsprechend präzise räumliche Orientierung erlaubt.

Eine bevorzugte Weiterbildung der Erfindung zeichnet sich dadurch aus, dass die Basiselemente jeweils Führungen umfassen und sich zumindest in Teilbereichen entlang der Förderstrecke zum Eingriff in die Führungen eingerichtete Führungsmittel befinden. Dies bietet den Vorteil, dass die Sattelelemente über die Basiselemente in den genannten Teilbereichen entlang der Förderstrecke zusätzlich geführt werden. Auf diese Weise wird die präzise Ausrichtung der Sattelelemente auch unter Einwirkung externer Kräfte, beispielsweise während des Bearbeitungsvorgangs der Geflügelkörper bzw. der Teile davon, stets gewährleistet. Vorzugsweise sind die Führungen der Basiselemente sowie die in Teilbereichen entlang der Förderstrecke angeordneten Führungsmittel als Linearführungen ausgebildet.

Eine bevorzugte Ausgestaltung der Erfindung zeichnet sich dadurch aus, dass an den Sattelelementen Verstellmittel angeordnet sind, die eingerichtet sind, im Zusammenwirken mit entlang der Förderstrecke angeordneten Steuermitteln die Sattelelemente um die Drehachse zu verschwenken. Dies bietet den weiteren Vorteil, dass neben der automatischen Änderung der Orientierung der Sattelelemente während eines Umlaufs die Sattelelemente zusätzlich um die genannte Drehachse verschwenkt werden. So ermöglicht die vorliegende Erfindung einerseits, die Drehachse der Sattelelemente während eines Umlaufs des Endlosförderers verschieden auszurichten und zugleich die Sattelelemente um diese Drehachse zu verschwenken. Auf diese Weise wird eine besonders hohe Flexibilität hinsichtlich der räumlichen Ausrichtung der Geflügelkörper oder Teilen davon erzielt.

Weiter bevorzugt sind die Verstellmittel und die Steuermittel jeweils als Kurvensteuerung ausgebildet, die eingerichtet ist, die Sattelelemente um die Drehachse jeweils in 90°-Schritten zu verschwenken. Vorteilhafterweise werden so die Sattelelemente bzw. die geförderten Geflügelkörper bzw. Geflügelteile selbsttätig durch die entlang der Förderstrecke angeordneten Steuermittel jeweils in 90°-Schritten in die optimale Bearbeitungsposition verschwenkt. Die Kurvensteuerung ist verstellmittelseitig vorzugsweise als Malteser-Kreuz ausgebildet, in dessen Ausnehmungen die Steuermittel beispielsweise in Form von Rundstäben in Eingriff gelangen.

Des Weiteren wird die Aufgabe durch die eingangs genannte Vorrichtung zur Filetgewinnung von Geflügelkörpern oder Teilen davon gelöst, wobei diese Vorrichtung eine Fördereinrichtung mit den zuvor genannten Merkmalen umfasst sowie mindestens eine entlang der Förderstrecke angeordnete zum Aufsatteln der Geflügelkörper auf die Aufnahmeelemente eingerichtete Beschickungsstation, Enthäutewerkzeuge sowie Filetanlösewerkzeuge, eine Ablösestation zum vollständigen Lösen der Filets von der Geflügelkarkasse sowie eine Abwurfstation zum Entfernen der filetfreien Geflügelkarkasse von dem jeweiligen Aufnahmeelement, wobei die Beschickungsstation, die Abwurfstation und die Ablösestation in einem oben liegenden Bereich der Förderstrecke angeordnet sind, während die Enthäutewerkzeuge sowie die Filetanlösewerkzeuge in einem unten liegenden Bereich der Förderstrecke angeordnet sind. Auf diese Weise werden die jeweiligen Bearbeitungsschritte mittels der genannten Bearbeitungsstation an Positionen der Förderstrecke ausgeführt, an denen die Sattelelemente für diese Bearbeitung optimal ausgerichtet sind.

Eine vorteilhafte Weiterbildung der Erfindung sieht vor, dass die erfindungsgemäße Vorrichtung weiter mindestens ein zur Schultergelenkpositionsbestimmung eingerichtetes Messmittel sowie eine Steuereinrichtung umfasst, die ausgebildet ist, in Abhängigkeit der ermittelten Schultergelenkposition die Filetanlösewerkzeuge zu steuern. Das mindestens eine Messmittel dient der Erfassung der Position der Schultergelenke. Auf Basis dieser ermittelten Position wird mittels der Steuereinrichtung die Ansteuerung der Filetanlösewerkzeuge bewirkt. Die erfasste Schultergelenkposition dient so als Referenz für die Koordinierung des zeitlichen Einsteuerns der Filetanlösewerkzeuge. Auf diese Weise werden die Filets präzise angelöst.

Die Aufgabe wird auch durch ein entsprechendes Verfahren zum kontinuierlichen Fördern von Geflügelkörpern oder Teilen davon und zum Ausrichten derselben in verschiedene Bearbeitungspositionen gelöst, indem der Endlosförderer in einer gegenüber der Horizontalen um einen Neigungswinkel α größer 0° und kleiner 90° geneigten Förderebene umläuft und die Basiselemente jeweils mittels Winkelelementen mit einem Streckwinkel β kleiner 180° und größer 90° an dem Endlosförderer angeordnet sind. Durch die Schrägstellung der Förderebene sowie der mittels der Winkelelemente unter dem genannten Streckwinkel β angeordneten Basiselementen, ändert sich die Ausrichtung bzw. Orientierung der Sattelelemente selbsttätig während eines Umlaufes des Endlosförderers. So wird auf überraschend einfache Weise eine selbsttätige Orientierungsänderung der Basiselemente und damit der Sattelelemente erzielt, um die Geflügelkörper oder Teile davon in die für eine Bearbeitung jeweils optimale Position zu bringen. Eine andernfalls erforderliche aufwendige Mechanik zur Änderung der Orientierung und Ausrichtung der Sattelelemente kann dank der vorliegenden Erfindung entfallen.

Gemäß einer weiteren vorteilhaften Ausbildung der Erfindung ist vorgesehen, dass die Winkelgröße des Streckwinkels β der Differenz aus 180° und dem Neigungswinkel α entspricht. Die genannte Dimensionierung der Winkelgrößen bewirken, dass die Schrägstellung bzw. Neigung der Förderebene und die winklige Stellung der Winkelelemente zu einer Änderung der Ausrichtung der Basiselemente und der Sattelelemente führt.

Gemäß einer weiteren vorteilhaften Ausgestaltung weist der Streckwinkel β eine Winkelgröße von 135° und der Neigungswinkel α eine Winkelgröße von 45° auf. Die Wahl dieser Winkelgrößen erweist sich als besonders vorteilhaft, da so die Ausrichtung der Drehachse bei jedem Umlauf von der Horizontalen in die Vertikale und umgekehrt zyklisch wechselt. Die vertikale sowie die horizontale Ausrichtung der Drehachse ist jeweils besonders vorteilhaft für die Ausführung bestimmter Bearbeitungsschritte.

Gemäß einer weiteren bevorzugten Ausbildung ist jeweils der Streckwinkel β der Winkelelemente einstellbar. Dies bietet den Vorteil, dass die Ausrichtung und Orientierung der Basiselemente sowie der Sattelelemente optimal an den gewünschten Einsatzzweck angepasst werden kann. Die Winkelelemente umfassten hierzu vorzugsweise Einstellmittel, mittels derer die Größe des Streckwinkels β voreingestellt oder dynamisch während des laufenden Betriebes der Fördereinrichtung angepasst werden kann.

Eine weitere zweckmäßige Ausbildung der Erfindung sieht vor, die Basiselemente mittels Führungen zu führen, in die zumindest in Teilbereichen entlang der Förderstrecke angeordnete Führungsmittel eingreifen. Hierdurch wird eine zusätzliche Führung der Basiselemente erzielt, sodass diese auch bei Krafteinwirkung von außen, beispielsweise durch an der Förderstrecke angeordnete Bearbeitungswerkzeuge, stets beibehalten wird.

Eine vorteilhafte Weiterbildung der Erfindung sieht vor, die Sattelelemente um die Drehachse mittels an den Sattelelementen angeordneten Verstellmitteln durch Zusammenwirken entlang der Förderstrecke angeordneten Steuermitteln zu verschwenken. Vorteilhafter Weise werden so die Geflügelkörper bzw. Teile davon in die gewünschte Orientierung zur Durchführung von Bearbeitungsschritten gebracht. Das Verschwenken um die Drehachse stellt neben der bereits durch die Schrägstellung des Förderebene sowie der Anordnung der Basiselemente mittels der Winkelelemente beim Umlauf erfolgenden Orientierungsänderung eine zusätzliche Möglichkeit dar, die Sattelelemente mit den Geflügelkörpern oder Teilen davon in eine optimale Bearbeitungsposition zu bringen.

Eine vorteilhafte Ausbildung der Erfindung zeichnet sich dadurch aus, dass die Sattelelemente in 90°-Schritten mittels der jeweils als Kurvensteuerung ausgebildeten Verstellmittel schrittweise verschwenkt werden. Auf diese Weise wird eine Art Arretierfunktion realisiert, sodass die Sattelelemente um die Drehachse verschwenkbar sind, jedoch in definierten Endpositionen selbsttätig im Anschluss an die Verschwenkbewegung verbleiben.

Schließlich wird die Aufgabe auch durch ein Verfahren zur Filetgewinnung von Geflügelkörpern oder Teilen davon gelöst, umfassend ein Verfahren zum kontinuierlichen Fördern von Geflügelkörpern und zum Ausrichten derselben in verschiedene Bearbeitungspositionen mit den zuvor genannten Verfahrensmerkmalen sowie den folgenden weiteren Schritten: Aufsatteln der Geflügelkörper auf die Aufnahmeelemente an eine Beschickungsstation, Enthäuten der Geflügelkörper mittels Enthäutewerkzeugen, Anlösen der Filets mittels Filetanlösewerkzeugen, vollständiges Lösen der Filets von der Geflügelkarkasse an einer Ablösestation sowie Entfernen der filetfreien Geflügelkarkasse von dem jeweiligen Aufnahmeelement mittels einer Abwurfstation, wobei das Aufsatteln mittels der Beschickungsstation, das Entfernen der filetfreien Geflügelkarkasse mittels der Abwurfstation und das vollständige Lösen der Filets mittels der Ablösestation in einem oben liegenden Bereich der Förderstrecke erfolgt, während das Enthäuten mittels der Enthäutewerkzeuge sowie das Anlösen der Filets mittels der Filetanlösewerkzeuge in einem unten liegenden Bereich der Förderstrecke ausgeführt wird.

Vorteilhafter Weise ist weiter vorgesehen, die Schultergelenkposition mittels mindestens einem Messmittel zu bestimmen sowie die Filetanlösewerkzeuge mittels einer Steuereinrichtung in Abhängigkeit der ermittelten Schultergelenkposition zu steuern.

Zur Vermeidung von Wiederholungen wird im Zusammenhang mit den sich aus den erfindungsgemäßen Verfahren ergebenden Vorteilen ergänzend auf obige Ausführungen zur erfindungsgemäßen Fördereinrichtung sowie zur erfindungsgemäßen Vorrichtung zur Filetgewinnung hingewiesen. Die dort gemachten vorteilhaften Angaben gelten in analoger Weise auch für die zuvor beschriebenen erfindungsgemäßen Verfahren.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung der erfindungsgemäßen Förder-einrichtung in perspektivischer Ansicht,
- Fig. 2: die in Fig. 1 gezeigte Fördereinrichtung in Seitenansicht,
- Fig. 3: die in Figur 1 gezeigte Fördereinrichtung mit Führungen,
- Fig. 4: eine perspektivische Ansicht eines Aufnahmeelements und
- Fig. 5: eine schematische Ansicht der erfindungsgemäßen Vorrichtung zur Filetgewinnung von Geflügelkörpern oder Teilen davon.

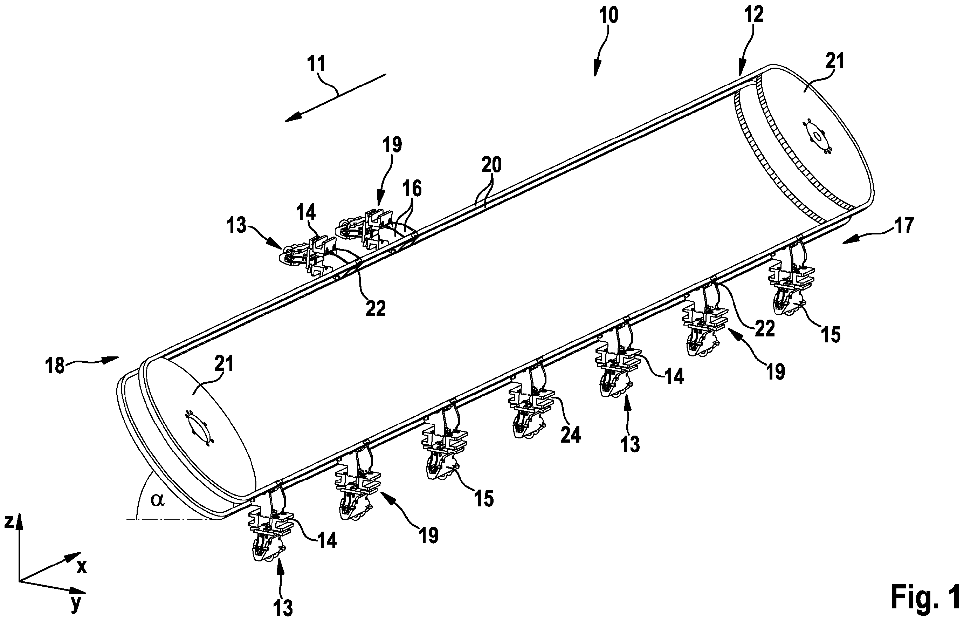

In Fig. 1 ist die erfindungsgemäße Fördereinrichtung 10 schematisch in perspektivischer Ansicht dargestellt. Die erfindungsgemäße Fördereinrichtung 10 ist eingerichtet, Geflügelkörper - in der Fig. 1 nicht gezeigt - in Förderrichtung 11 kontinuierlich zu fördern. Weiter ist die erfindungsgemäße Fördereinrichtung 10 eingerichtet, die Geflügelkörper in verschiedene Bearbeitungspositionen auszurichten. Die Fördereinrichtung 10 umfasst hierzu einen Endlosförderer 12. Der Endlosförderer 12 ist zur Halterung der Geflügelkörper mit Aufnahmeelementen 13 versehen. Der Endlosförderer 12 ist in einer Förderebene umlaufend eingerichtet und bildet so eine Förderstrecke für die Geflügelkörper. Die mittels der Aufnahmeelemente 13 gehaltenen Geflügelkörper werden auf diese Weise mittels des Endlosförderers 12 umlaufend gefördert.

Hierzu sind die Aufnahmeelemente 13 jeweils zur Aufnahme eines der Geflügelkörper eingerichtet und umfassen ein Basiselement 14 sowie ein Sattelelement 15, das um eine senkrecht zu der Förderrichtung 11 liegende Drehachse schwenkbar an dem Basiselement 14 angeordnet ist.

Weiter ist der Endlosförderer 12 in Schrägstellung angeordnet. Die Förderebene des Endlosförderers 12 ist gegenüber der Horizontalen um einen Neigungswinkel α im Bereich zwischen 0° und 90° geneigt angeordnet. Die Förderebene bezeichnet diejenige Ebene, in der die Aufnahmeelemente 13 umlaufen. Zusätzlich sind die Basiselemente 14 jeweils mittels Winkelelementen 16 mit einem Streckwinkel β im Bereich zwischen 180° und 90° an dem Endlosförderer 12 angeordnet.

Mit anderen Worten ist der Endlosförderer 12 derart in Schrägstellung angeordnet, dass die Förderebene gegenüber der XY-Ebene um den Neigungswinkel α geneigt ist. Aufgrund dieser Schrägstellung der Förderebene des Endlosförderers 12 passieren die Aufnahmeelemente 13 einen unteren Abschnitt 17 der Förderstrecke sowie einen oberen Abschnitt 18 derselben.

Vorteilhafterweise ist die Winkelgröße des Streckwinkels β gleich der Differenz aus 180° und dem Neigungswinkel α gewählt, insbesondere weist der Streckwinkel β eine Winkelgröße von 135° auf und der Neigungswinkel α eine Winkelgröße von 45°. Die letztgenannten Winkelgrößen sind beispielhaft anhand der erfindungsgemäßen Fördereinrichtung in Fig. 1 gezeigt. Der Fig. 1 ist zu entnehmen, dass bei der genannten Winkelgrößenwahl die Drehachsen der jeweiligen Sattelelemente 15 im Bereich des unteren Abschnitts 17 parallel zur Z-Achse ausgerichtet sind, während die Drehachsen im Bereich des oberen Abschnitts 18 parallel zur Y-Achse ausgerichtet sind. Auf diese Weise wird die Grundorientierung der Sattelelemente bzw. deren Drehachsen während des Umlaufs automatisch verändert, sodass diese im unteren Abschnitt 17 bzw. oberen Abschnitt 18 jeweils entsprechend verschiedene Ausrichtungen aufweisen.

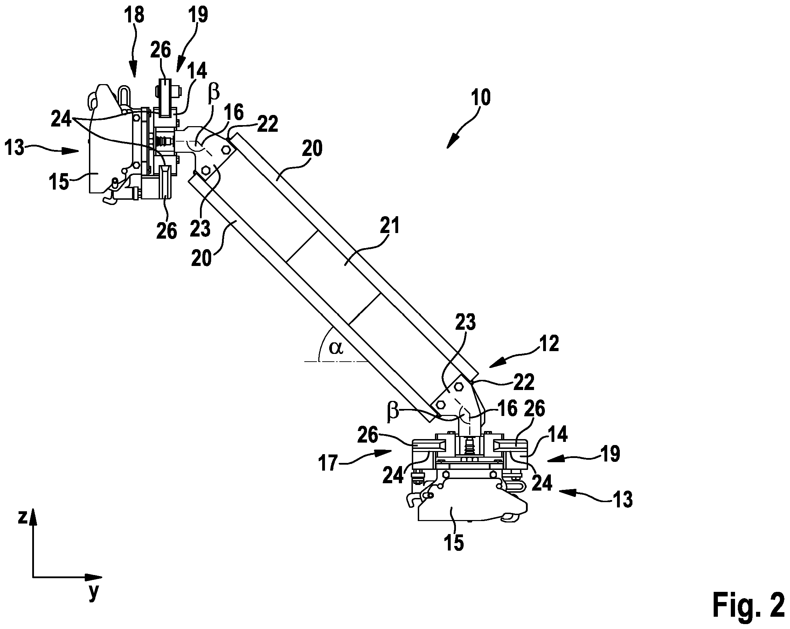

In der Fig. 2 ist die erfindungsgemäße Fördereinrichtung 10 mit Blickrichtung auf die YZ-Ebene dargestellt. Die Aufnahmeelemente 13 im Bereich des unteren Abschnitts 17 der Förderstrecke bewegen sich vom Betrachter weg, während die Aufnahmeelemente 13 im Bereich des oberen Abschnitts 18 sich auf diesen zu bewegen. Deutlich erkennbar ist die Änderung der Orientierung der Drehachse der Sattelelemente 15, nämlich von einer Ausrichtung parallel zur Z-Achse im Bereich des unteren Abschnitts 17 hin zu einer Ausrichtung parallel zur Y-Achse im Bereich des oberen Abschnitts 18.

In der gezeigten beispielhaften Ausführungsform werden die Geflügelkörperteile im Bereich des unteren Abschnitts der Förderstrecke nach unten freihängend transportiert, während diese im Bereich des oberen Abschnitts 18 der Förderstrecke in einer Aufrechtposition befördert werden.

An den Sattelelementen 15 - vgl. Fig. 1 und 2 - sind jeweils Verstellmittel 19 angeordnet, die eingerichtet sind, die Sattelelemente 15 um deren jeweilige Drehachse relativ zu dem Basiselement 14 zu verschwenken. Die Verstellmittel 19 sind insbesondere als Schwenkführungen ausgebildet, beispielsweise als Malteser-Kreuze, die eingerichtet sind, mit entlang der Förderstrecke angeordneten - in der Zeichnung nicht gezeigten - Steuermitteln in Eingriff zu gelangen. Durch das Zusammenwirken der Steuermittel mit den als Schwenkführungen eingerichteten Verstellmitteln 19 werden die Sattelelemente 15 entlang der Förderstrecke jeweils in die gewünschte Position verschwenkt.

Die Verstellmittel 19 sind also eingerichtet, im Zusammenwirken mit den entlang der Förderstrecke angeordneten Steuermitteln die Basiselemente 14 einschließlich der Sattelelemente 15 um deren jeweilige Drehachse zu verschwenken. Auf diese Weise ist es möglich, die Ausrichtung der Sattelelemente 15 relativ zu den jeweiligen Basiselementen 14 durch Verschwenken um die Drehachse zu ändern und so die Geflügelkörper bzw. die Teile davon für durchzuführende Bearbeitungsschritte optimal auszurichten.

Vorzugsweise weisen die Verstellmittel 19 vier jeweils um 90° versetzte Ausnehmungen 40 auf. Die Verstellmittel 19 mit den Ausnehmungen 40 bilden eine Art Malteser-Kreuz. Die Verstellmittel 19 und die Steuermittel sind folglich als Kurvensteuerung ausgebildet und eingerichtet, die die Sattelelemente 15 um die jeweilige Drehachse jeweils in 90° Schritten verschwenken.

Vorzugsweise ist jeweils der Streckwinkel β der Winkelelemente 16 einstellbar eingerichtet (in der Zeichnung nicht gezeigt). Auf diese Weise kann die räumliche Orientierung der Sattelelemente jeweils bedarfsgerecht eingestellt und an die örtlichen Gegebenheiten angepasst werden.

Weiter bevorzugt umfasst der Endlosförderer 12 zwei parallel zueinander angeordnete Förderketten 20. Die Förderketten 20 werden jeweils über mindestens zwei Doppelkettenräder 21 geführt. Die Doppelkettenräder 21 dienen einerseits als Umlenkelemente zum Führen und Umlenken der Förderketten und andererseits wird mindestens eines der Doppelkettenräder 21 motorisch angetrieben.

Insbesondere sind die Winkelelemente 16 an Halteeinrichtungen 22 angeordnet, die wiederum jeweils an beiden der Förderketten 20 angeordnet sind. Durch die beidseitige Anordnung der Halteeinrichtungen 22 wird gewährleistet, dass die räumliche Orientierung der Winkelelemente 16 relativ zu dem Endlosförderer 12 möglichst konstant gehalten wird.

Vorteilhafterweise sind die Halteeinrichtungen 22 jeweils plattenförmig ausgebildet und jedes der Basiselemente 14 ist über jeweils zwei der Winkelelemente 16 mit einer der Halteeinrichtungen 22 verbunden. Wie in den Figuren 1 und 2 gezeigt, sind die Winkelelemente 16 jeweils an gegenüberliegenden Stirnseiten 23 der Halteeinrichtung 22 angeordnet. Über die Winkelelemente 16 ist jeweils eine der Halteeinrichtungen 22 mit je einem der Basiselemente 14 verbunden. Die Verbindung von Halteeinrichtung 22 mit dem jeweiligen Basiselement 14 kann jedoch auch durch eines oder mehrere der Winkelelemente 16 erfolgen.

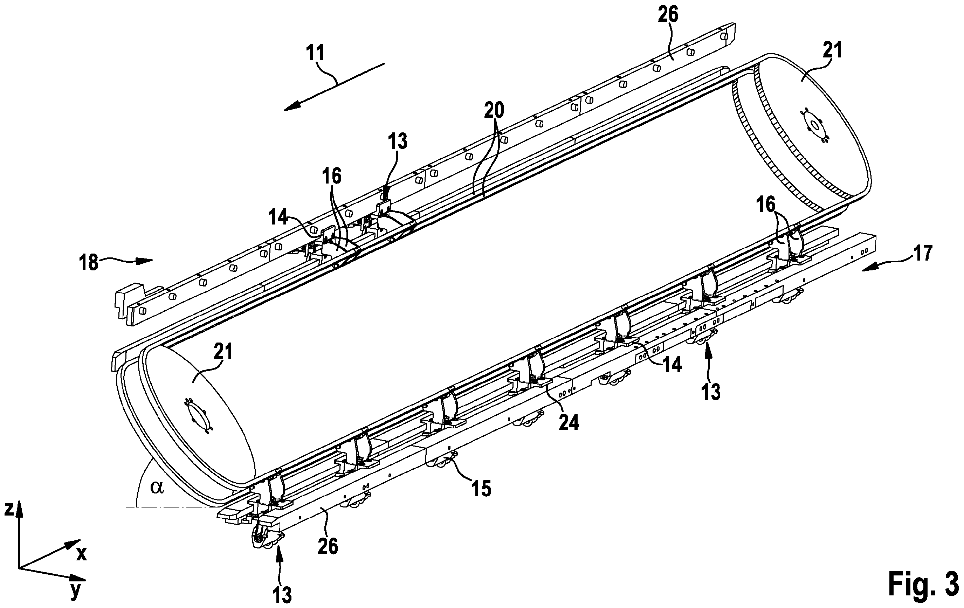

Wie in der Figur 3 gezeigt, umfassen die Basiselemente 14 vorteilhafterweise jeweils Führungen 24, die in die Führungsmittel 26, die sich zumindest in Teilbereichen entlang der Förderstrecke befinden und zum Eingriff in die vorgenannten Führungen 24 eingerichtet sind, eingreifen. Vorzugsweise befinden sich die Führungsmittel 26 entlang der Förderstrecke in dem unteren Abschnitt 17 sowie in dem oberen Abschnitt 18. Auf diese Weise werden die Basiselemente 14 in dem oberen Abschnitt 18 sowie in dem unteren Abschnitt 17 zusätzlich geführt, und sichergestellt, dass die Basiselemente 14 auch bei Krafteinwirkung von außen auf die Sattelelemente 15 exakt die vorgesehene Ausrichtung bzw. Orientierung beibehalten. Vorzugsweise sind die Führungen 24 sowie die dazu korrespondierend ausgebildeten Führungsmittel 26 als Linearführungen ausgebildet. Beispielsweise bilden die Führungen 24 jeweils einen U-profilförmigen Kanal, während die Führungsmittel 26 stabförmig mit entsprechend rechteckigem Querschnitt ausgebildet sind.

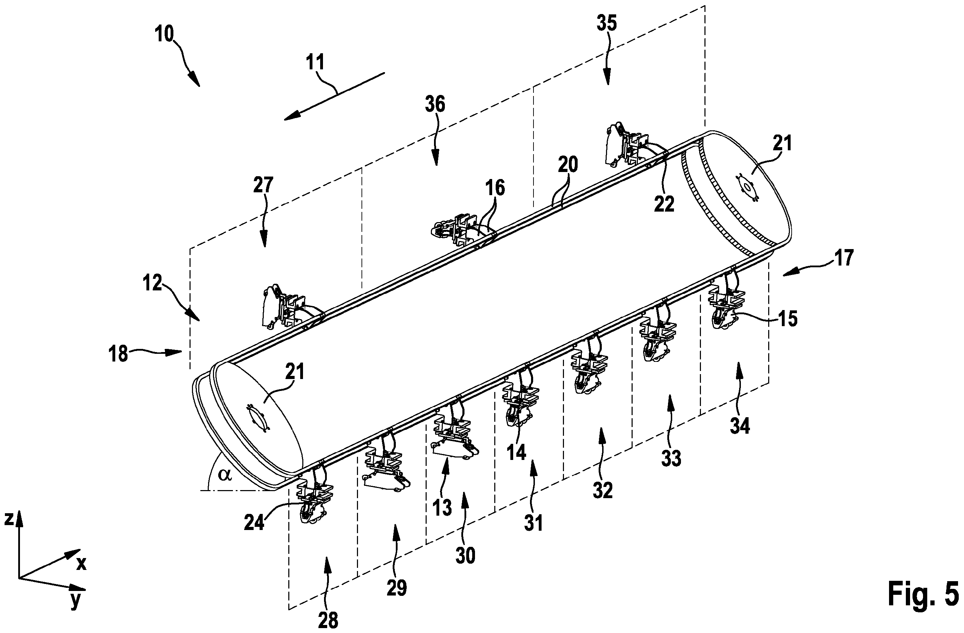

In der Fig. 5 ist eine schematische Ansicht der erfindungsgemäßen Vorrichtung zur Filetgewinnung von Geflügelkörpern oder Teilen davon gezeigt. Die erfindungsgemäße Vorrichtung umfasst die zuvor beschriebene Fördereinrichtung 10 sowie mehrere Bearbeitungsstationen, die aus Gründen der besseren Übersichtlichkeit in der Fig. 5 nicht explizit dargestellt sind. Die Bearbeitungsstationen sind in der Fig. 5 durch jeweils gestrichelte Linien angedeutet, um deren Position entlang der Förderstrecke zu verdeutlichen. Die erfindungsgemäße Vorrichtung zur Filetgewinnung umfasst weiter eine Beschickungsstation 27, die eingerichtet ist, die Geflügelkörper oder die Teile davon auf die Aufnahmeelemente 13 bzw. die Sattelelemente 15 aufzusatteln.

Vorzugsweise werden die Geflügelkörper oder Teile davon auf dem Sattelelement 15 mittels eines steuerbar eingerichteten Halteelements 39 durch Klemmung gehalten. In Förderrichtung nachgeordnet folgen der Beschickungsstation 27 Enthäutewerkzeuge 28, die eingerichtet sind, die Geflügelhaut abzulösen. Vorzugsweise sind den Enthäutewerkzeugen 28 Stanzwerkzeuge 29 nachgeordnet, die zum Entfernen des Gabelbeins und/oder der Schultergelenke eingerichtet sind. Hieran schließen sich Filetanlösewerkzeuge an, die vorzugsweise durch Messmittel 30 zur Bestimmung der Position der Schultergelenke, einen auf Basis der ermittelten Schultergelenkposition eingerichteten Einzelfiletschneider 31, einen ersten Filetschaber 32, einen Außenfiletanlöser 33 sowie einen zweiten Filetschaber 34 gebildet sind. Weiter folgt eine Ablösestation 35, die zum vollständigen Lösen der Filets von der Geflügelkarkasse eingerichtet ist. Die darauffolgende Abwurfstation 36 ist zum Entfernen der filetfreien Geflügelkarkasse von dem jeweiligen Aufnahmeelement 13 bzw. dem Sattelelement 15 ausgebildet und eingerichtet.

Wie der Fig. 5 zu entnehmen ist, sind die Beschickungsstation 27, die Abwurfstation 36 und die Ablösestation 35 in einem obenliegenden Bereich der Förderstrecke angeordnet, d. h. die vorgenannten Stationen sind im Bereich des oberen Abschnitts 18 angeordnet. Die übrigen Einrichtungen 28 bis 34 sind an dem untenliegenden Bereich der Förderstrecke angeordnet, d. h. im Bereich des unteren Abschnitts 17. Die Ablösestation 35 ist vorzugsweise eingerichtet, die Filets manuell vollständig von der Geflügelkarkasse eines der Geflügelkörper zu trennen. Alternativ ist es auch möglich, dass die Ablösestation 35 Mittel zum automatischen Ablösen der Filets umfasst. Vorzugsweise ist eine solche automatische Ablösestation 35 im Bereich des unteren Abschnitts 17 angeordnet.

Aus der Fig. 5 wird ersichtlich, dass die Sattelelemente in dem oberen Abschnitt 18 vorzugsweise derart orientiert sind, dass die Drehachse der Sattelelemente 15 jeweils parallel zur Y-Achse ausgerichtet ist. Mit anderen Worten ist die Drehachse der Sattelelemente im oberen Abschnitt 18 zumindest im Wesentlichen horizontal ausgerichtet. Im unteren Abschnitt 17 sind die Drehachsen der Sattelelemente 15 hingegen parallel zur Z-Achse, d. h. also vorzugsweise vertikal ausgerichtet. Insbesondere die in der Fig. 5 gezeigte Orientierung des Sattelelements 15 beim Vorbeilauf an der Ablösestation 35 erweist sich als besonders vorteilhaft, da bei manueller Bearbeitung die Filets durch eine bodenwärts gerichtete Zugbewegung gelöst werden.

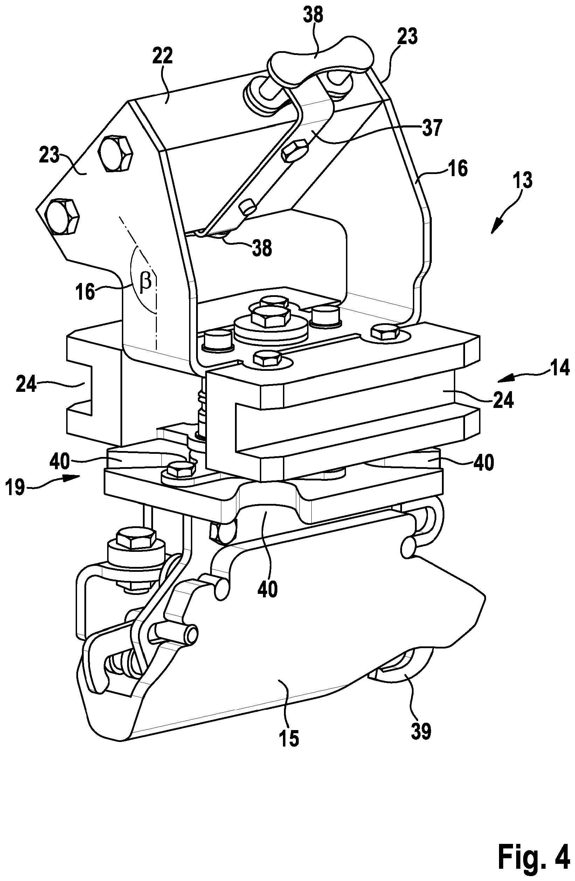

In der Fig. 4 ist in perspektivischer Ansicht ein Aufnahmeelement 13 detailliert gezeigt. Das Aufnahmeelement 13 umfasst ein Basiselement 14, an dem zwei der Winkelelemente 16 angeordnet sind. Die Winkelelemente 16 stellen die Verbindung zu der - in der Fig. 4 nicht gezeigten - Fördereinrichtung 10 her. An dem Basiselement 14 ist das Sattelelement 15 verschwenkbar um eine - in der Zeichnung nicht gezeigte - Drehachse angeordnet.

Die Sattelelemente 15 sind folglich jeweils relativ zu dem Basiselement 14 verdrehbar angeordnet. Die Drehachse verläuft mittig durch das Basiselement 14 und ist in der Figur 4 vertikal ausgerichtet. Beim Umlauf der Sattelelemente 15 mittels der Fördereinrichtung 10 ändert sich die Ausrichtung der Drehachse wie zuvor beschrieben entsprechend.

Das Sattelelement 15 umfasst vorzugsweise das Halteelement 39, das eingerichtet ist, den jeweiligen Geflügelkörper durch Klemmung zu fassen und auf dem Sattelelement 15 zu halten, sowie die Führungen 24, die insbesondere als U-profilförmige Ausnehmungen ausgebildet sind. Weiter bevorzugt sind die Winkelelemente 16 an den Stirnseiten 23 einer Halteeinrichtung 22 angeordnet. Die Halteeinrichtung 22 ist vorzugsweise mittels einer Haltespange 37 jeweils an den in der Figur 5 nur angedeuteten Kettengliedern 38 der Förderketten 20 angeordnet.

Der Schutzumfang der vorliegenden Erfindung wird durch die angefügten Ansprüche definiert.

## Patentansprüche

1. Fördereinrichtung (10) zum kontinuierlichen Fördern von Geflügelkörpern oder Teilen davon in Förderrichtung (11), ausgebildet und eingerichtet zum Ausrichten der Geflügelkörper in verschiedene Bearbeitungspositionen, umfassend
einen mit Aufnahmeelementen (13) zur Halterung der Geflügelkörper versehenen Endlosförderer (12), wobei der Endlosförderer (12) in einer Förderebene umlaufend eingerichtet ist und eine Förderstrecke bildet, und wobei
die Aufnahmeelemente (13) jeweils ein zur Aufnahme eines der Geflügelkörper eingerichtetes und an einem Basiselement (14) um eine senkrecht zu der Förderrichtung (11) liegende Drehachse schwenkbar angeordnetes Sattelelement (15) umfassen,
**dadurch gekennzeichnet, dass**
der Endlosförderer (12) derart in Schrägstellung angeordnet ist, dass die Förderebene gegenüber der Horizontalen um einen Neigungswinkel α größer 0° und kleiner 90° geneigt ist und
die Basiselemente (14) jeweils mittels Winkelelementen (16) mit einem Streckwinkel β kleiner 180° und größer 90° an dem Endlosförderer (12) angeordnet sind.

2. Fördereinrichtung (10) nach Anspruch 1, **dadurch gekennzeichnet, dass** die Winkelgröße des Streckwinkels β der Differenz aus 180° und dem Neigungswinkel α entspricht.

3. Fördereinrichtung (10) nach einem der Ansprüche 1 oder 2, **dadurch gekennzeichnet, dass** der Streckwinkel β eine Winkelgröße von 135° und der Neigungswinkel α eine Winkelgröße von 45° aufweist.

4. Fördereinrichtung (10) nach einem der Ansprüche 1 bis 3, **dadurch gekennzeichnet, dass** jeweils der Streckwinkel β der Winkelelemente (16) einstellbar eingerichtet ist.

5. Fördereinrichtung (10) nach einem der Ansprüche 1 bis 4, **dadurch gekennzeichnet, dass** der Endlosförderer (12) zwei parallel zueinander angeordnete Förderketten (20) umfasst, die jeweils über mindestens zwei Doppelkettenräder (21) geführt sind.

6. Fördereinrichtung (10) nach Anspruch 5, **dadurch gekennzeichnet, dass** die Winkelelemente (16) an Halteeinrichtungen (22) angeordnet sind, die jeweils an beiden der Förderketten (20) angeordnet sind.

7. Fördereinrichtung (10) nach Anspruch 6, **dadurch gekennzeichnet, dass** die Halteeinrichtungen (22) jeweils plattenförmig ausgebildet sind und jedes der Basiselemente (14) über jeweils zwei der Winkelelemente (16) mit einer der Halteeinrichtungen (22) verbunden sind.

8. Fördereinrichtung (10) nach einem der Ansprüche 1 bis 7, **dadurch gekennzeichnet, dass** die Basiselemente (14) jeweils Führungen (24) umfassen und sich zumindest in Teilbereichen entlang der Förderstrecke zum Eingriff in die Führungen (24) eingerichtete Führungsmittel (26) befinden.

9. Fördereinrichtung (10) nach einem der Ansprüche 1 bis 8, **dadurch gekennzeichnet, dass** an den Sattelelementen (15) Verstellmittel (19) angeordnet sind, die eingerichtet sind, im Zusammenwirken mit entlang der Förderstrecke angeordneten Steuermitteln, die Sattelelemente (15) um die Drehachse zu verschwenken.

10. Fördereinrichtung (10) nach Anspruch 9, **dadurch gekennzeichnet, dass** die Verstellmittel (19) und die Steuermittel jeweils als Kurvensteuerung ausgebildet sind, die eingerichtet ist, die Sattelelemente (15) um die Drehachse jeweils in 90°-Schritten zu verschwenken.

11. Vorrichtung zur Filetgewinnung von Geflügelkörpern oder Teilen davon, umfassend eine Fördereinrichtung (10) nach einem der Ansprüche 1 bis 10 sowie mindestens eine entlang der Förderstrecke angeordnete zum Aufsatteln der Geflügelkörper auf Aufnahmeelemente (13) eingerichtete Beschickungsstation (27), Enthäutewerkzeuge (28) sowie Filetanlösewerkzeuge (31, 32, 33, 34), eine Ablösestation (35) zum vollständigen Lösen der Filets von der Geflügelkarkasse sowie eine Abwurfstation (36) zum Entfernen der filetfreien Geflügelkarkasse von dem jeweiligen Aufnahmeelement (13), wobei die Beschickungsstation (27), die Abwurfstation (36) und die Ablösestation (35) in einem obenliegenden Bereich der Förderstrecke angeordnet sind, während die Enthäutewerkzeuge (28) sowie die Filetanlösewerkzeuge (31, 32, 33, 34) in einem untenliegenden Bereich der Förderstrecke angeordnet sind.

12. Vorrichtung nach Anspruch 11 weiter umfassend mindestens ein zur Schultergelenkpositionsbestimmung eingerichtetes Messmittel (30) sowie eine Steuereinrichtung, die ausgebildet ist, in Abhängigkeit der ermittelten Schultergelenkposition die Filetanlösewerkzeuge (31, 32, 33, 34) zu steuern.

13. Verfahren zum kontinuierlichen Fördern von Geflügelkörpern oder Teilen davon und zum Ausrichten derselben in verschiedene Bearbeitungspositionen, umfassend Fördern der Geflügelkörper in Förderrichtung (11) mittels eines mit Aufnahmeelementen (13) zur Halterung der Geflügelkörper versehenen Endlosförderers (12), wobei der Endlosförderer (12) eine Förderstrecke bildet und in einer Förderebene umläuft, und wobei die Aufnahmeelemente (13) jeweils ein zur Aufnahme eines der Geflügelkörper eingerichtetes und an dem Basiselement (14) um eine senkrecht zu der Förderrichtung liegenden Drehachse schwenkbar angeordnetes Sattelelement (15) umfassen,
**gekennzeichnet dadurch, dass**
der Endlosförderer (12) in einer gegenüber der Horizontalen um einen Neigungswinkel α größer 0° und kleiner 90° geneigten Förderebene umläuft und die Basiselemente (14) jeweils mittels Winkelelementen (16) mit einem Streckwinkel β kleiner 180° und größer 90° an dem Endlosförderer (12) angeordnet sind.

14. Verfahren nach Anspruch 13, **dadurch gekennzeichnet, dass** die Winkelgröße des Streckwinkel β der Differenz aus 180° und dem Neigungswinkel α entspricht.

15. Verfahren nach einem der Ansprüche 13 oder 14, **dadurch gekennzeichnet, dass** der Streckwinkel β eine Winkelgröße von 135° und der Neigungswinkel a eine Winkelgröße von 45° aufweist.

16. Verfahren nach einem der Ansprüche 13 bis 15, **dadurch gekennzeichnet, dass** jeweils der Streckwinkel β der Winkelelemente (16) einstellbar ist.

17. Verfahren nach einem der Ansprüche 13 bis 16, **gekennzeichnet durch** Führen der Basiselemente (14) mittels Führungen (24), in die zumindest in Teilbereichen entlang der Förderstrecke angeordnete Führungsmitteln (26) eingreifen.

18. Verfahren nach einem der Ansprüche 13 bis 17, **gekennzeichnet durch** Verschwenken der Sattelelemente (15) um die Drehachse mittels an den Sattelelementen (15) angeordneten Verstellmitteln (19) durch Zusammenwirken mit entlang der Förderstrecke angeordneten Steuermitteln.

19. Verfahren nach Anspruch 18, **gekennzeichnet durch** schrittweises Verschwenken der Sattelelemente (15) in 90°-Schritten mittels der jeweils als Kurvensteuerung ausgebildeten Verstellmittel (19).

20. Verfahren zur Filetgewinnung von Geflügelkörpern oder Teilen davon, umfassend ein Verfahren zum kontinuierlichen Fördern von Geflügelkörpern und zum Ausrichten derselben in verschiedene Bearbeitungspositionen nach einem der Ansprüche 13 bis 19 sowie die folgenden Schritte:
- Aufsatteln der Geflügelkörper auf die Aufnahmeelemente (13) an einer Beschickungsstation (27),
- Enthäuten der Geflügelkörper mittels Enthäutewerkzeugen (28),
- Anlösen der Filets mittels Filetanlösewerkzeugen (31, 32, 33, 34),
- vollständiges Lösen der Filets von der Geflügelkarkasse an einer Ablösestation (35) sowie
- Entfernen der filetfreien Geflügelkarkasse von dem jeweiligen Aufnahmeelement (13) mittels einer Abwurfstation (36),
wobei das Aufsatteln mittels der Beschickungsstation (27), das Entfernen der filetfreien Geflügelkarkasse mittels der Abwurfstation (36) und das vollständige Lösen der Filets mittels der Ablösestation (35) in einem obenliegenden Bereich der Förderstrecke erfolgt, während das Enthäuten mittels der Enthäutewerkzeuge (28) sowie das Anlösen der Filets mittels der Filetanlösewerkzeuge (31, 32, 33, 34) in einem untenliegenden Bereich der Förderstrecke ausgeführt wird.

21. Verfahren nach Anspruch 20, weiter umfassend Bestimmen der Schultergelenkposition mittels mindestens einem Messmittel (30) sowie Steuern der Filetanlösewerkzeuge (31, 32, 33, 34) mittels einer Steuereinrichtung in Abhängigkeit der ermittelten Schultergelenkposition.

## Claims

1. Conveying device (10) for continuously conveying poultry bodies or parts thereof in a conveying direction (11), configured and adapted to orient the poultry bodies into different processing positions, comprising
a continuous conveyor (12) provided with receiving elements (13) for holding the poultry bodies, wherein the continuous conveyor (12) is adapted to revolve in a conveying plane and forms a conveying path, and wherein
the receiving elements (13) each comprise a saddle element (15) adapted to receive one of the poultry bodies and arranged on a base element (14) to be pivotable about an axis of rotation lying perpendicular to the conveying direction (11),
**characterised in that**
the continuous conveyor (12) is so arranged in an oblique position that the conveying plane is inclined relative to the horizontal by an angle of inclination α greater than 0° and less than 90°, and
the base elements (14) are each arranged on the continuous conveyor (12) by means of angled elements (16) with an angle of extension β less than 180° and greater than 90°.

2. Conveying device (10) according to claim 1, **characterised in that** the angle size of the angle of extension β corresponds to the difference of 180° and the angle of inclination α.

3. Conveying device (10) according to one of claims 1 or 2, **characterised in that** the angle of extension β has an angle size of 135° and the angle of inclination α has an angle size of 45°.

4. Conveying device (10) according to any one of claims 1 to 3, **characterised in that** the angle of extension β of the angled elements (16) is in each case adapted to be adjustable.

5. Conveying device (10) according to any one of claims 1 to 4, **characterised in that** the continuous conveyor (12) comprises two conveying chains (20) arranged parallel to one another, each of which is guided *via* at least two double sprockets (21).

6. Conveying device (10) according to claim 5, **characterised in that** the angled elements (16) are arranged on holding devices (22) which in each case are arranged on both of the conveying chains (20).

7. Conveying device (10) according to claim 6, **characterised in that** the holding devices (22) are each in plate form, and each of the base elements (14) is connected *via* two each of the angled elements (16) to one of the holding devices (22).

8. Conveying device (10) according to any one of claims 1 to 7, **characterised in that** the base elements (14) each comprise guides (24), and guiding means (26) adapted for engagement into the guides (24) are located at least in part-regions along the conveying path.

9. Conveying device (10) according to any one of claims 1 to 8, **characterised in that** adjusting means (19) are arranged on the saddle elements (15), which adjusting means are adapted, in conjunction with control means arranged along the conveying path, to pivot the saddle elements (15) about the axis of rotation.

10. Conveying device (10) according to claim 9, **characterised in that** the adjusting means (19) and the control means are each in the form of a cam control which is adapted to pivot the saddle elements (15) about the axis of rotation in each case in 90° steps.

11. Apparatus for recovering fillets from poultry bodies or parts thereof, comprising a conveying device (10) according to any one of claims 1 to 10 as well as at least one mounting station (27) arranged along the conveying path and adapted for loading the poultry bodies onto receiving elements (13), skinning tools (28) and also fillet loosening tools (31, 32, 33, 34), a removal station (35) for completely removing the fillets from the poultry carcass, and a discharge station (36) for removing the fillet-free poultry carcass from the respective receiving element (13), wherein the mounting station (27), the discharge station (36) and the removal station (35) are arranged in an upper region of the conveying path, while the skinning tools (28) and the fillet loosening tools (31, 32, 33, 34) are arranged in a lower region of the conveying path.

12. Apparatus according to claim 11, further comprising at least one measuring means (30) adapted for determining the shoulder joint position, and also a control device which is configured to control the fillet loosening tools (31, 32, 33, 34) in dependence on the determined shoulder joint position.

13. Method for continuously conveying poultry bodies or parts thereof and for orienting them into different processing positions, comprising conveying the poultry bodies in a conveying direction (11) by means of a continuous conveyor (12) provided with receiving elements (13) for holding the poultry bodies, wherein the continuous conveyor (12) forms a conveying path and revolves in a conveying plane, and wherein the receiving elements (13) each comprise a saddle element (15) which is adapted to receive one of the poultry bodies and is arranged on the base element (14) to be pivotable about an axis of rotation lying perpendicular to the conveying direction,
**characterised in that**
the continuous conveyor (12) revolves in a conveying plane which is inclined relative to the horizontal by an angle of inclination α greater than 0° and less than 90°, and the base elements (14) are each arranged on the continuous conveyor (12) by means of angled elements (16) with an angle of extension β less than 180° and greater than 90°.

14. Method according to claim 13, **characterised in that** the angle size of the angle of extension β corresponds to the difference of 180° and the angle of inclination α.

15. Method according to either claim 13 or claim 14, **characterised in that** the angle of extension β has an angle size of 135° and the angle of inclination α has an angle size of 45°.

16. Method according to any one of claims 13 to 15, **characterised in that** the angle of extension β of each of the angled elements (16) is adjustable.

17. Method according to any one of claims 13 to 16, **characterised by** guiding of the base elements (14) by means of guides (24) into which there engage guiding means (26) arranged at least in part-regions along the conveying path.

18. Method according to any one of claims 13 to 17, **characterised by** pivoting of the saddle elements (15) about the axis of rotation by means of adjusting means (19) arranged on the saddle elements (15) by cooperation with control means arranged along the conveying path.

19. Method according to claim 18, **characterised by** stepwise pivoting of the saddle elements (15) in 90° steps by means of the adjusting means (19) each in the form of a cam control.

20. Method for recovering fillets from poultry bodies or parts thereof, comprising a method for continuously conveying poultry bodies and for orienting them into different processing positions according to any one of claims 13 to 19, as well as the following steps:
- loading the poultry bodies onto the receiving elements (13) at a mounting station (27),
- skinning the poultry bodies by means of skinning tools (28),
- loosening the fillets by means of fillet loosening tools (31, 32, 33, 34),
- completely removing the fillets from the poultry carcass at a removal station (35), and
- removing the fillet-free poultry carcass from the respective receiving element (13) by means of a discharge station (36),
wherein loading by means of the mounting station (27), removal of the fillet-free poultry carcass by means of the discharge station (36) and complete removal of the fillets by means of the removal station (35) take place in an upper region of the conveying path, while skinning by means of the skinning tools (28) and loosening of the fillets by means of the fillet loosening tools (31, 32, 33, 34) are carried out in a lower region of the conveying path.

21. Method according to claim 20, further comprising determining the shoulder joint position by means of at least one measuring means (30) and controlling the fillet loosening tools (31, 32, 33, 34) by means of a control device in dependence on the determined shoulder joint position.

## Revendications

1. Appareil de transport (10) pour le transport continu de corps de volailles ou de parties de ceux-ci dans la direction de transport (11), configuré et adapté pour orienter les corps de volailles dans différentes positions de traitement, comprenant
un transporteur sans fin (12) pourvu d'éléments de réception (13) pour maintenir les corps de volailles, le transporteur sans fin (12) étant adapté de manière à circuler dans un plan de transport et formant une voie de transport, et
les éléments de réception (13) comprenant respectivement un élément de selle (15) adapté pour recevoir l'un des corps de volailles et agencé sur un élément de base (14) de manière à pouvoir pivoter autour d'un axe de rotation perpendiculaire à la direction de transport (11),
**caractérisé en ce que**
le transporteur sans fin (12) est agencé en position oblique de telle sorte que le plan de transport est incliné par rapport à l'horizontale d'un angle d'inclinaison α supérieur à 0° et inférieur à 90°, et
les éléments de base (14) sont respectivement agencés sur le transporteur sans fin (12) au moyen d'éléments angulaires (16) avec un angle d'étirement β inférieur à 180° et supérieur à 90°.

2. Appareil de transport (10) selon la revendication 1, **caractérisé en ce que** la valeur angulaire de l'angle d'étirement β correspond à la différence entre 180° et l'angle d'inclinaison α.

3. Appareil de transport (10) selon l'une quelconque des revendications 1 ou 2, **caractérisé en ce que** l'angle d'étirement β présente une valeur angulaire de 135° et l'angle d'inclinaison α une valeur angulaire de 45°.

4. Appareil de transport (10) selon l'une quelconque des revendications 1 à 3, **caractérisé en ce que** l'angle d'étirement β des éléments angulaires (16) est adapté pour être réglable.

5. Appareil de transport (10) selon l'une quelconque des revendications 1 à 4, **caractérisé en ce que** le transporteur sans fin (12) comprend deux chaînes de transport (20) agencées parallèlement l'une à l'autre, qui sont guidées respectivement par l'intermédiaire d'au moins deux roues à chaîne doubles (21).

6. Appareil de transport (10) selon la revendication 5, **caractérisé en ce que** les éléments angulaires (16) sont agencés sur des appareils de maintien (22) qui sont agencés respectivement sur les deux chaînes de transport (20).

7. Appareil de transport (10) selon la revendication 6, **caractérisé en ce que** les appareils de maintien (22) sont respectivement configurés en forme de plaque et chacun des éléments de base (14) est relié à l'un des appareils de maintien (22) par l'intermédiaire de deux des éléments angulaires (16) respectivement.

8. Appareil de transport (10) selon l'une quelconque des revendications 1 à 7, **caractérisé en ce que** les éléments de base (14) comprennent respectivement des guides (24) et **en ce que** des moyens de guidage (26) adaptés pour s'engager dans les guides (24) se trouvent au moins dans des zones partielles le long de la voie de transport.

9. Appareil de transport (10) selon l'une quelconque des revendications 1 à 8, **caractérisé en ce que** des moyens de réglage (19) sont agencés sur les éléments de selle (15), qui sont adaptés pour faire pivoter les éléments de selle (15) autour de l'axe de rotation en coopération avec des moyens de commande agencés le long de la voie de transport.

10. Appareil de transport (10) selon la revendication 9, **caractérisé en ce que** les moyens de réglage (19) et les moyens de commande sont respectivement configurés sous forme de commande à came, qui est adaptée pour faire pivoter les éléments de selle (15) autour de l'axe de rotation respectivement par pas de 90°.

11. Dispositif pour l'obtention de filets à partir de corps de volailles ou de parties de ceux-ci, comprenant un appareil de transport (10) selon l'une quelconque des revendications 1 à 10 ainsi qu'au moins un poste de chargement (27) agencé le long de la voie de transport, adapté pour la mise en selle des corps de volailles sur des éléments de réception (13), des outils de dépouillement (28) ainsi que des outils de détachement de filets (31, 32, 33, 34), un poste de détachement (35) pour détacher complètement les filets de la carcasse de la volaille ainsi qu'un poste d'éjection (36) pour retirer la carcasse de la volaille exempte de filets de l'élément de réception respectif (13), le poste de chargement (27), le poste d'éjection (36) et le poste de détachement (35) étant agencés dans une zone supérieure de la voie de transport, tandis que les outils de dépouillement (28) ainsi que les outils de détachement de filets (31, 32, 33, 34) sont agencés dans une zone inférieure de la voie de transport.

12. Dispositif selon la revendication 11, comprenant en outre au moins un moyen de mesure (30) adapté pour déterminer la position de l'articulation de l'épaule, ainsi qu'un appareil de commande qui est configuré pour commander les outils de détachement de filets (31, 32, 33, 34) en fonction de la position de l'articulation de l'épaule déterminée.

13. Procédé pour le transport continu de corps de volailles ou de parties de ceux-ci et pour l'orientation de ceux-ci dans différentes positions de traitement, comprenant le transport des corps de volailles dans la direction de transport (11) au moyen d'un transporteur sans fin (12) pourvu d'éléments de réception (13) pour le maintien des corps de volaille, le transporteur sans fin (12) formant une voie de transport et circulant dans un plan de transport, et les éléments de réception (13) comprenant respectivement un élément de selle (15) adapté pour recevoir l'un des corps de volailles et agencé sur l'élément de base (14) de manière à pouvoir pivoter autour d'un axe de rotation perpendiculaire à la direction de transport,
**caractérisé en ce que**
le transporteur sans fin (12) circule dans un plan de transport incliné par rapport à l'horizontale d'un angle d'inclinaison α supérieur à 0° et inférieur à 90° et les éléments de base (14) sont agencés respectivement sur le transporteur sans fin (12) au moyen d'éléments angulaires (16) ayant un angle d'étirement β inférieur à 180° et supérieur à 90°.

14. Procédé selon la revendication 13, **caractérisé en ce que** la valeur angulaire de l'angle d'étirement β correspond à la différence entre 180° et l'angle d'inclinaison α.

15. Procédé selon l'une quelconque des revendications 13 ou 14, **caractérisé en ce que** l'angle d'étirement β a une valeur angulaire de 135° et l'angle d'inclinaison α une valeur angulaire de 45°.

16. Procédé selon l'une quelconque des revendications 13 à 15, **caractérisé en ce que** l'angle d'étirement β des éléments d'angle (16) est respectivement réglable.

17. Procédé selon l'une quelconque des revendications 13 à 16, **caractérisé par** le guidage des éléments de base (14) au moyen de guides (24) dans lesquels s'engagent des moyens de guidage (26) agencés au moins dans des zones partielles le long de la voie de transport.

18. Procédé selon l'une quelconque des revendications 13 à 17, **caractérisé par** le pivotement des éléments de selle (15) autour de l'axe de rotation au moyen de moyens de réglage (19) agencés sur les éléments de selle (15) par coopération avec des moyens de commande agencés le long de la voie de transport.

19. Procédé selon la revendication 18, **caractérisé par** un pivotement pas à pas des éléments de selle (15) par pas de 90° au moyen des moyens de réglage (19) configurés respectivement sous forme de commande à came.

20. Procédé d'obtention de filets à partir de corps de volailles ou de parties de ceux-ci, comprenant un procédé pour le transport continu des corps de volailles et pour l'orientation de ceux-ci dans différentes positions de traitement selon l'une quelconque des revendications 13 à 19, ainsi que les étapes suivantes :
- la mise en selle des corps de volailles sur les éléments de réception (13) à un poste de chargement (27),
- le dépouillement des corps de volaille au moyen d'outils de dépouillement (28),
- le détachement des filets au moyen d'outils de détachement de filets (31, 32, 33, 34),
- le détachement complet des filets de la carcasse de la volaille à un poste de détachement (35), et
- le retrait de la carcasse de volaille exempte de filets de l'élément de réception respectif (13) au moyen d'un poste d'éjection (36),
la mise en selle au moyen du poste de chargement (27), le retrait de la carcasse de volaille exempte de filets au moyen du poste d'éjection (36) et le détachement complet des filets au moyen du poste de détachement (35) étant effectués dans une zone supérieure de la voie de transport, tandis que le dépouillement au moyen des outils de dépouillement (28) ainsi que le détachement des filets au moyen des outils de détachement de filets (31, 32, 33, 34) sont effectués dans une zone inférieure de la voie de transport.

21. Procédé selon la revendication 20, comprenant en outre la détermination de la position de l'articulation de l'épaule au moyen d'au moins un moyen de mesure (30) ainsi que la commande des outils de détachement de filets (31, 32, 33, 34) au moyen d'un appareil de commande en fonction de la position de l'articulation de l'épaule déterminée.
